# EUROPEAN PATENT APPLICATION

(11) **EP 4 440 103 A1**
(43) Date of publication of application: **02.10.2024**
(21) Application number: 23020330.9
(22) Date of filing: 04.07.2023
(51) Int. Cl.: H04N 9/31, G03B 21/56, E04H 3/22

(54) **INTERACTIVELY RECONFIGURABLE IMMERSIVE PROJECTION SPACE**

(30) Priority: 27.03.2023 PL 44421323
(71) Applicant: Art Box Gallery S.A., 00-841 Warszawa (PL)
(72) Inventor: Sikora, Piotr, 00-465 Warszawa (PL); Sikora-Kowalkowska, Joanna, 00-465 Warszawa (PL)
(74) Representative: Matyka, Malgorzata

(57) **Abstract**

The subject of invention is an interactively reconfigurable immersive-projection space with exhibition, educational and event purposes.

## Description

The subject of invention is an interactively reconfigurable immersive-projection space with exhibition, educational and event purposes.

Traditional exhibition spaces such as classic museums, galleries but aslo expo halls are places open to the public, where one can have direct contact with exhibits, objects, artifacts, presented products or audiovisual exhibition form.

However, such exhibitions are not always satisfactory to the viewer or visitors.

Traditional exhibitions, however, by design limit the viewer's or visitor's contact with the exhibit or product on display. Objects presented in museums, galleries or during classic product presentations are intended to familiarize the viewer with the work mainly by looking at the work. Even in the case of exhibitions or the presentation of interactive displays, the viewer is still limited to staying in a permanently designed space plan. The entity organizing the exibition (museum, galery, event spaces) is limited in space and any changes related to the exibition involve its temporary closure.Which has the effect of limiting the consumer's ability to participate in the exhibition. Therefore, museums are trying to modernize their offerings.

From the description CN 104798444 A is known a method of creating an stmospheric lighting effect to suport a moving image in an exhibition space. The invention relates to a cinema system and a light source that can be used on stage during a performance to generate a moving image.

From another description US 2014/0343994 is known a system for improving social communication and participation and interaction of event participants at various events. Each participant is provided with the tools necessary to effectively create the experience of an event that best suits his or her goals and objectives, e.g. quickly identifying and locating interesting and relevant seminars, classes, exhibitors.

The purpose of the present invention is to provide an interactive reconfigurable immersive-projection space

It is a multifunctional immersive space, where multisensory shows are created-exhibitions and events with different themes, the content of which can be changed during a few seconds and the space itself can completely change its rooms layout.

Terms used above and in the patent description and claims, have the following meanings, but are not intended to limit the scope.
**Immersive space** - the space of electronic interactive art.
**Multisensory spectacle** - a show with a wide spectrum of combinations of image, voice, light, architecture, colors, music and sound.

The subject of the invention is an interactively reconfigurable immersive-projection space that has been reconfigurable rooms where content is displayed via a control application.

The space where reconfigurable rooms have walls in the form of raised screen.

The space where the control application has a start page (Menu).

The space where the Menu has a page of items Pixers, Screens, Audio, Scenarios, Timing Automation, individual devices.

A method to control the interactively reconfigurable immersive-projection space defined above, which includes:
- reading the control application contained in the device/panel coupled to a set of configurations that run screens, media servers, projectors, equipment settings, audio,
- raising or lowering the projection screens,
- scenarios that configure the space,
- schedule of activities.

The method where rooms are reconfigured into any areas, favorably larger areas through screens.

The method where the screens are also walls that are lowered or raised.

The method where pixers turn media servers on or off.

The method where projectors include the function of either turning on or off, changing the active video input and blanking the projector without turning it off.

The method where projectors can be managed by room areas.

The method where audio triggers the volume in given areas of the room.

The method where the scenarios set the different walls of the rooms, projectors, media servers,.

The method where the activity scheduler has the ability to automate the timed on and off activity of the desired program.

### Figures description:

**Fig.1** - shows Pixers (pixers are computers for controlling the projector system) - a plan of projector layout.
**Fig.2** - shows the projection room plan.
**Fig.3** - shows the projectors (A-H).
**Fig.4** - shows the homepage.
**Fig.5** - shows the start page with the menu for managing the various components of the system.
**Fig.6** - shows the side of the item Projectors for controlling projectors.
**Fig.7** - shows the management side of individual devices.
**Fig.8** - shows the position side of Pixers.
**Fig.9** - shows the position of Screens.
**Fig.10** - shows the position of Screens.
**Fig.11** - shows the audio zones.
**Fig.12** - shows a page of scenarios.
**Fig.13** - shows the configuration set side.
**Fig.14** - shows the configuration side.
**Fig.15** - shows the timing automation side.

The invention is presented by the following example of implementation, which does not constitute its limitation.

### Example

The galery consists of 9 rooms with projections on the walls and a multi- channel sound system.

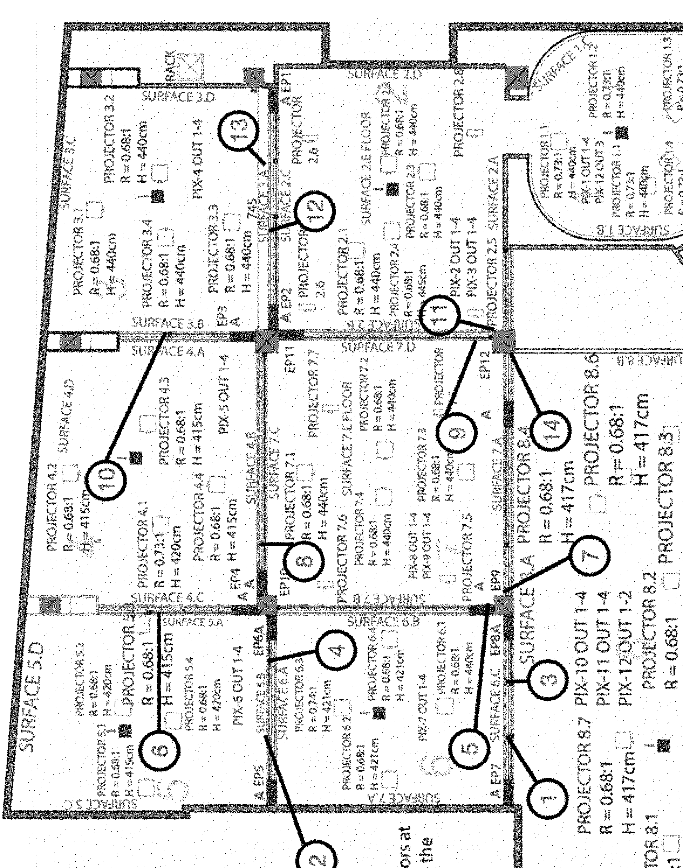

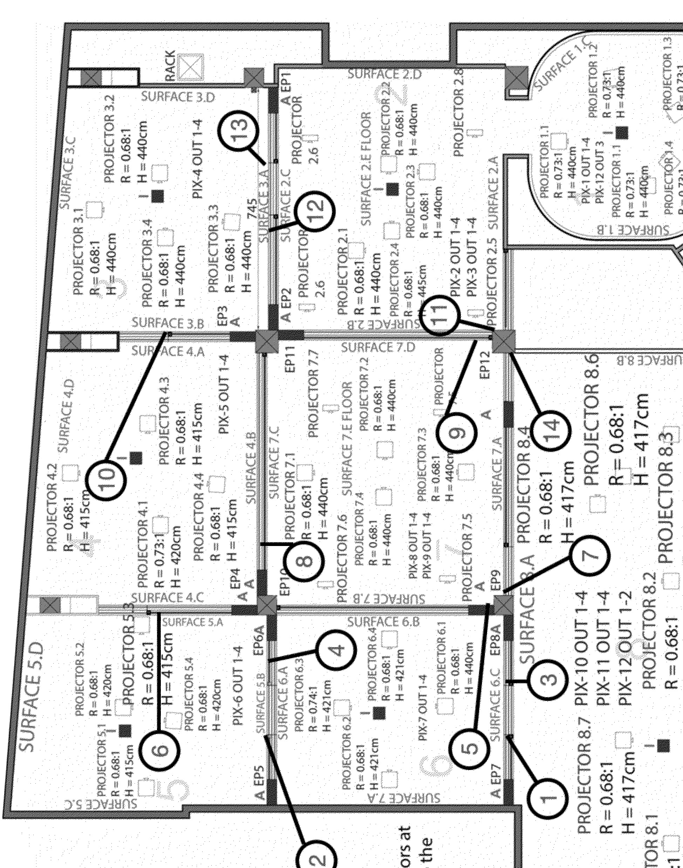

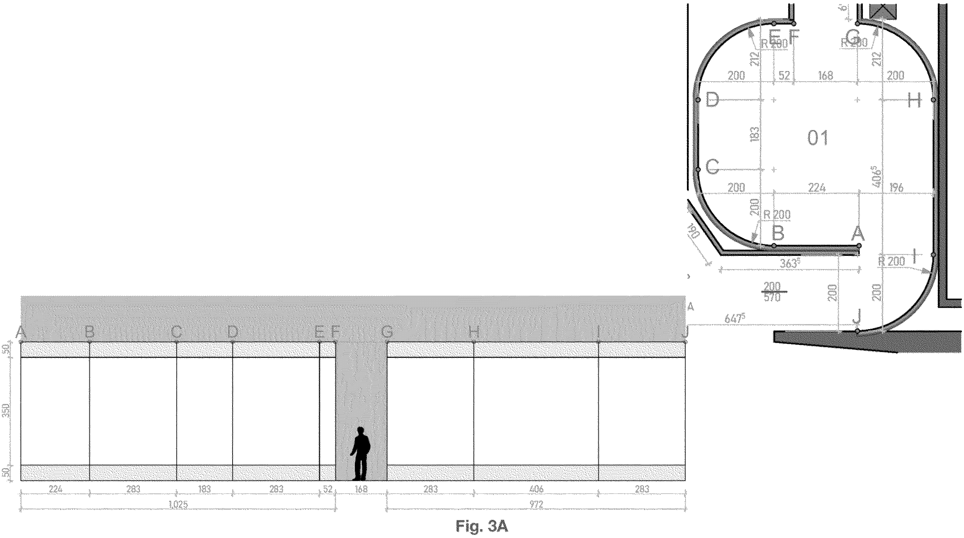

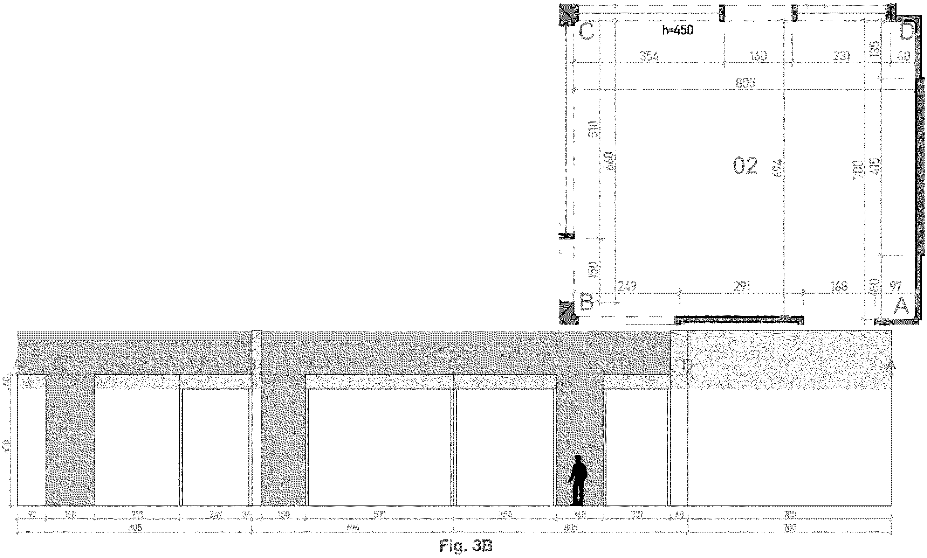

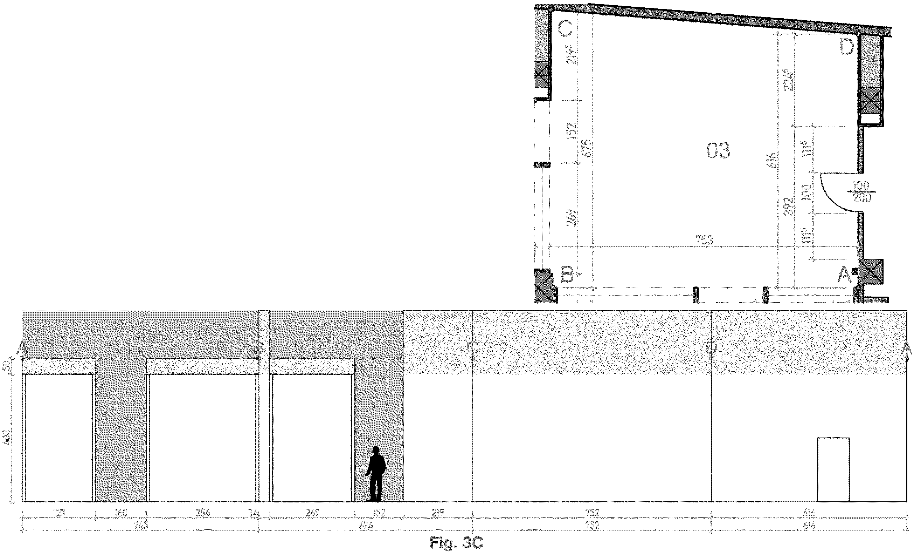

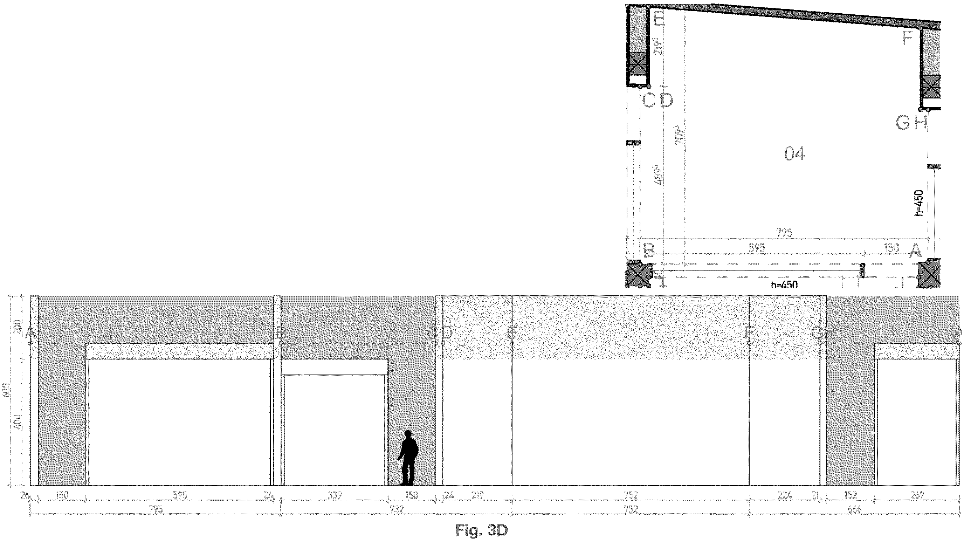

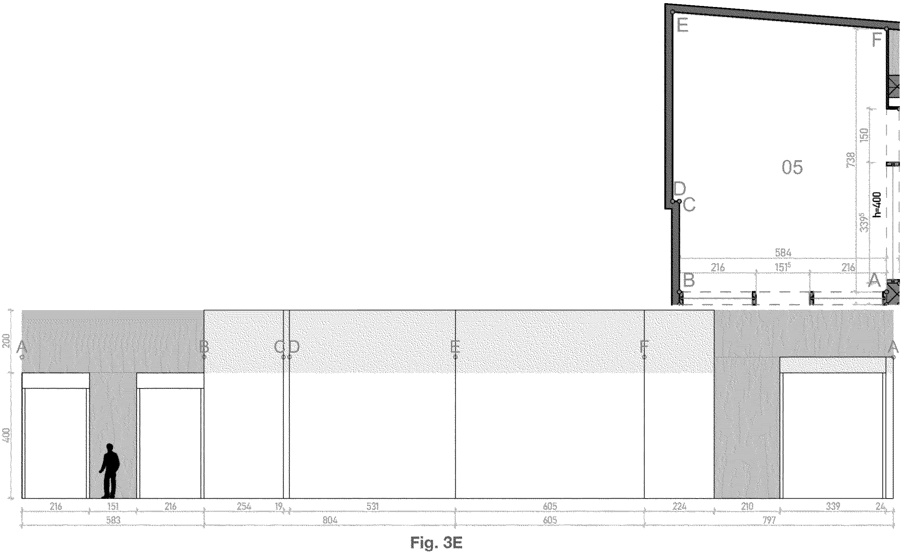

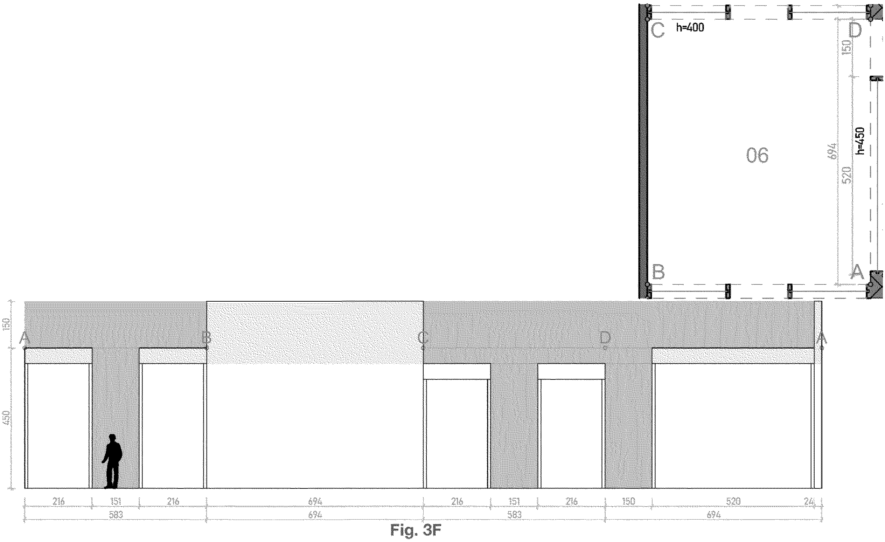

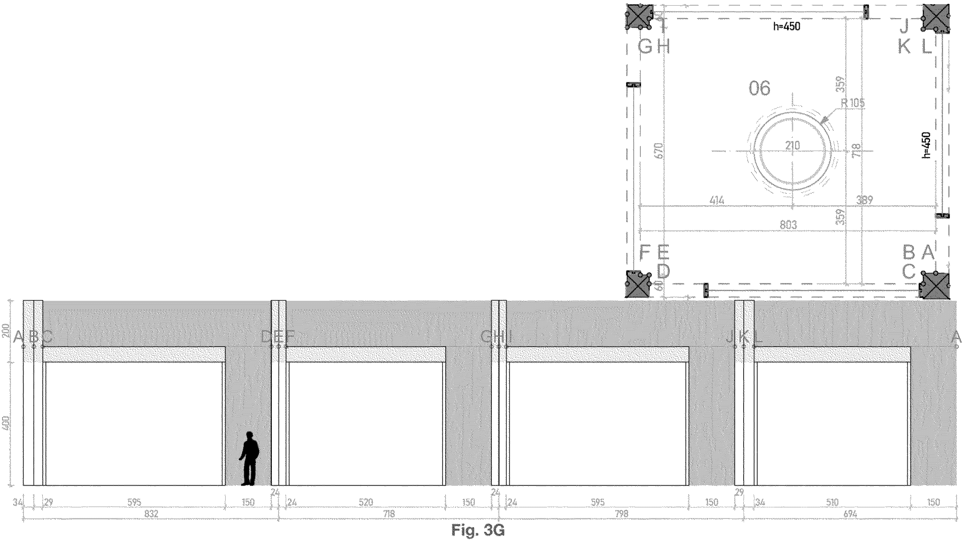

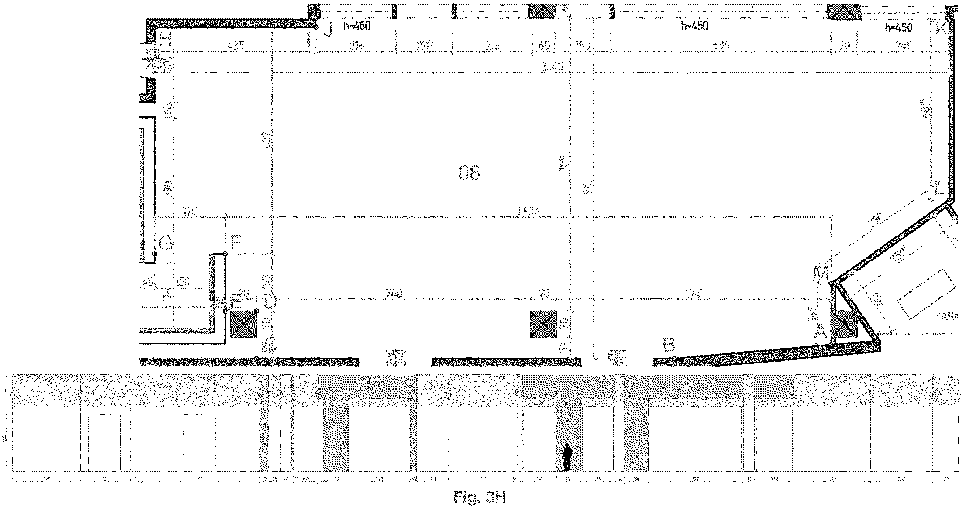

The rooms can be reconfigured into arbitrialy larger areas using raised projection screens that are also the walls of the rooms. Reconfiguration of the spaces in combination with simultaneous change of projection content is a new technical features (Fig. 1-3).

A control application has been developed to control the reconfiguration process and display content.

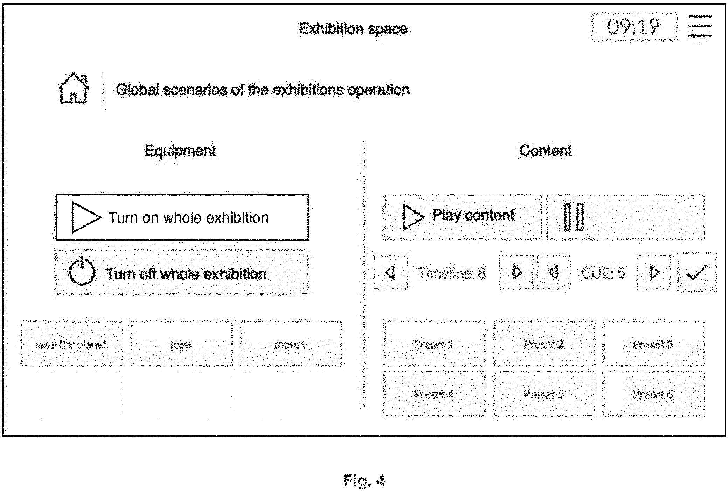

The start page (Fig.4) allows you to start the projection and turn on all systems.

It also includes 6 user-defined hardware and screen presents triggered by pressing and confirming the rectangular buttons on the bottom left. In addition, there are 6 user-defined presents with sets of projection content. These are located on the bottom right.

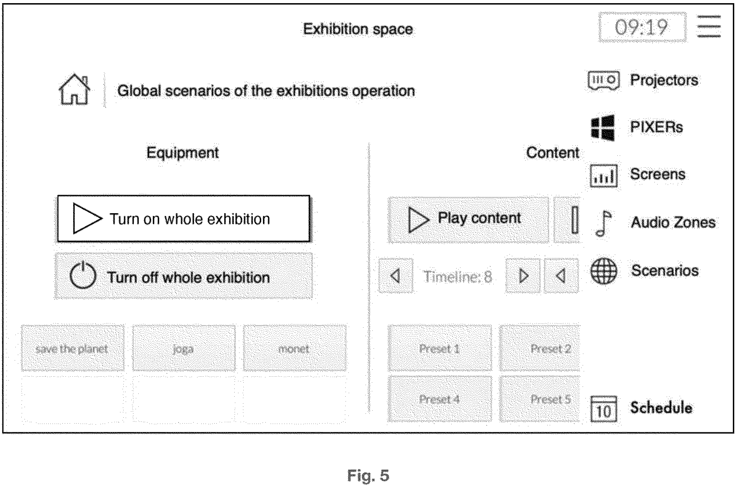

The icon of three horizontal bars in the upper right comer gives access to the menu for managing individual system components (Fig.5).

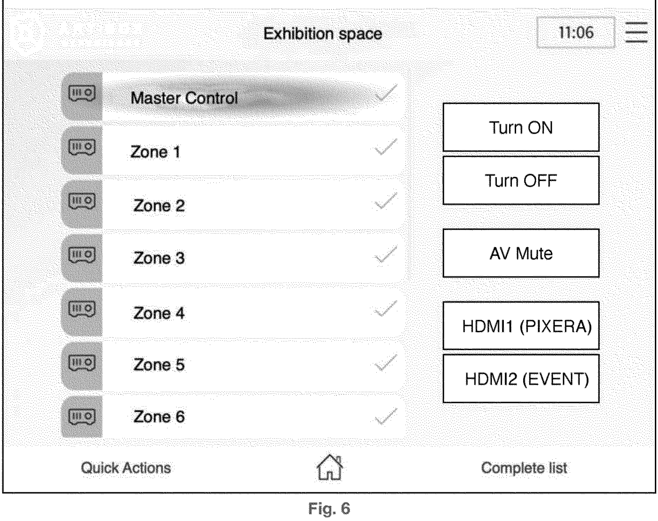

The 'projectors' item gives access to control 53 projectors. Functions include turning on, turning off, changing the active video input and blanking the projector without turning it off (Fig.6).

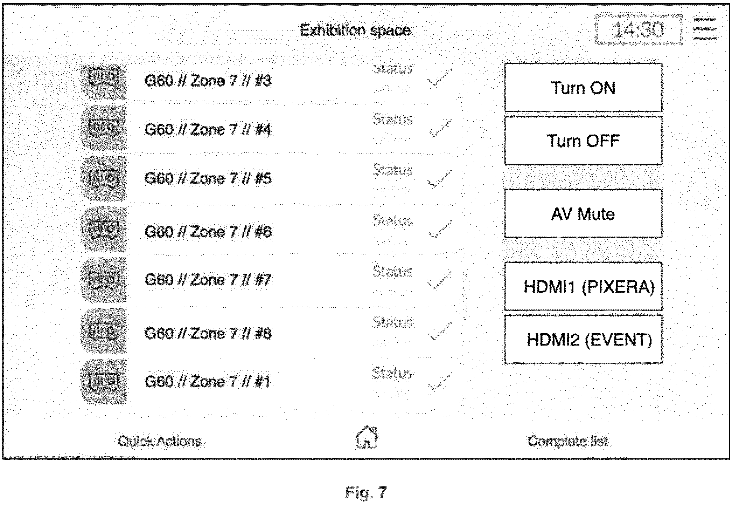

The projectors can be manager by room areas as above, or individual devices then a scrollable list of devices appears (Fig.7).

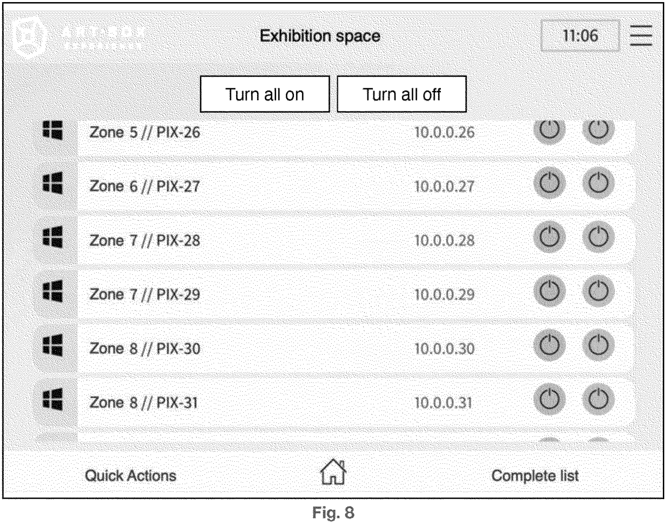

The 'Pixers' item turns on and off the media servers used for room configuration (Fig.8).

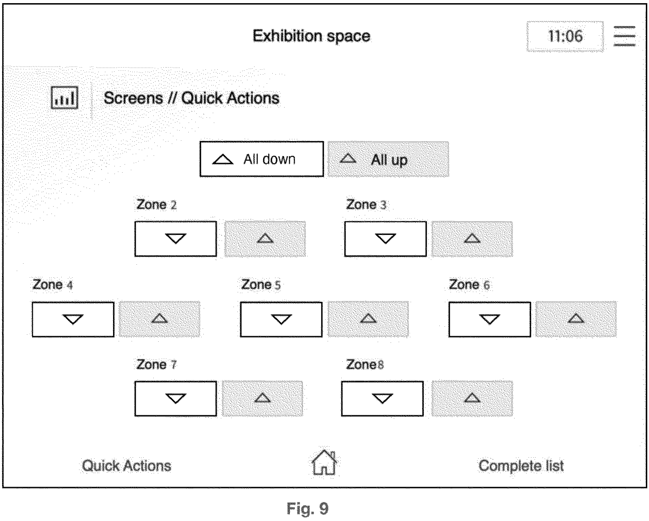

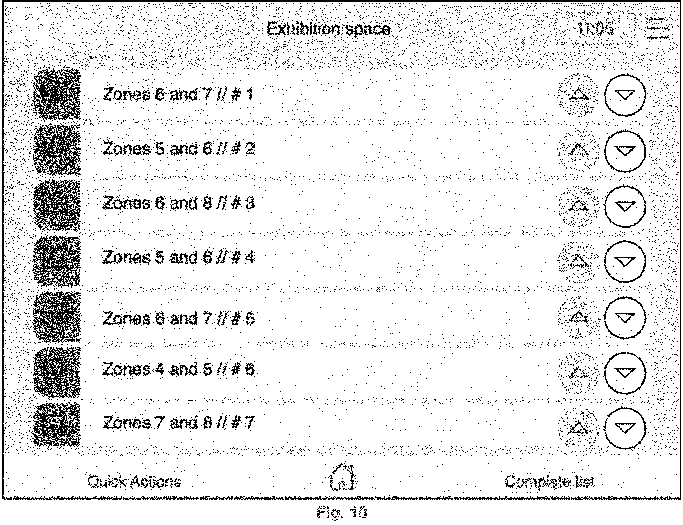

The 'Screens' item allows you to raise or lower screens that are also room walls. This can be done with rooms or individual screens (Fig.9-10).

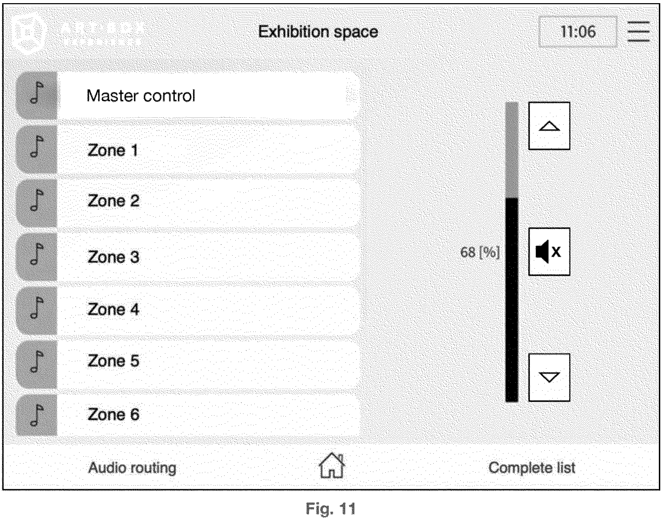

Audio zones allow you to control the volume in individual rooms (Fig.11).

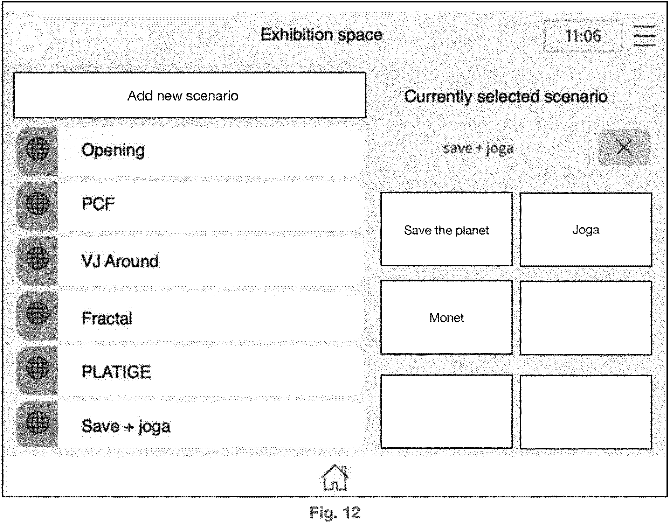

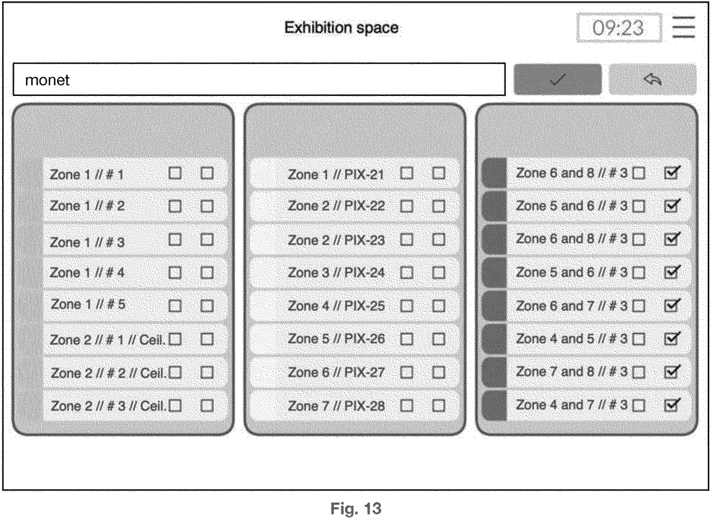

Scenarios allow defining sets of configurations of individual room walls and enabled projectors and media servers. Each scenario has an innovative name given by the user and an assigned set of 6 wall layouts and system somponents (Fig.12-13).

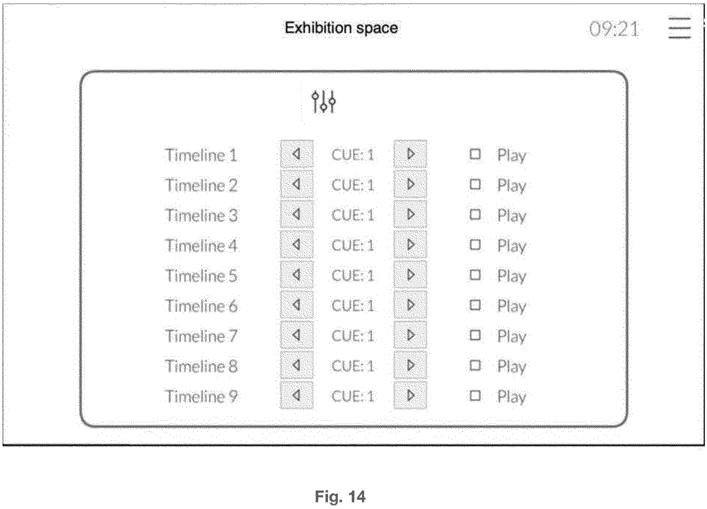

A set of configurations is defined by selecting which screen/walls are to be raised and which are to be lowered, and which projectors and media servers are to be enabled and which are not (Fig.14).

Media configurations are defined in which rooms and on which walls a given projection is displayed by defining a set of numeric markers in the projection material, and a tany given time the desired projection fragment can be recalled in the desired room.

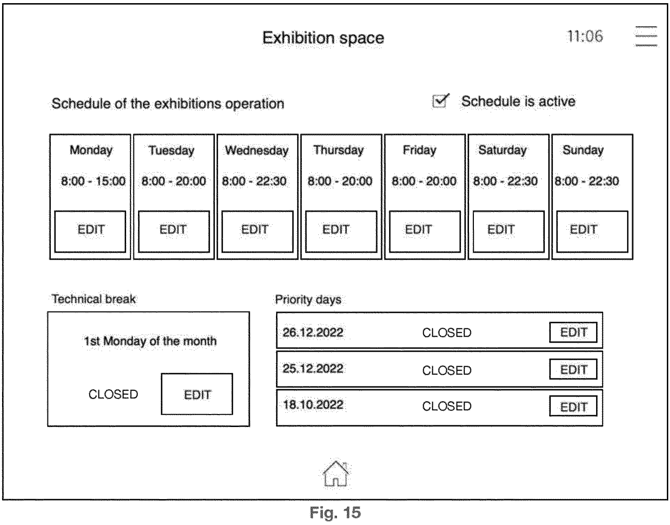

The last element of the application is the scheduler, which gives the possibility of automating the temporal actions of switching on and off the desired program (Fig.15).

## Claims

1. An interactively reconfigurable immersive-projection space **characterized by** the fact that that having reconfigurable rooms where content is displayed via a control application.

2. The space according to claim 1, **characterized by** the fact that reconfigurable rooms have walls in the form of raised screen.

3. The space according to claim 1, **characterized by** the fact that the control application has a start page (Menu).

4. The space according to claim 3, **characterized by** the fact that the Menu has a page of items Pixers, Screens, Audio, Scenarios, Timing Automation, individual devices.

5. A method for control an interactively reconfigurable immersive-projection space defined in claim 1, **characterized by** the fact that it includes:
- reading the control application contained in the device/panel coupled to a set of configurations that run screens, media servers, projectors, equipment settings, audio,
- raising or lowering the projection screens,
- scenarios that configure the space,
- schedule of activities.

6. The method according to claim 5, **characterized by** the fact that the rooms are reconfigured into any areas, favorably larger areas through screens.

7. The method according to claim 5, **characterized by** the fact that the screens are also walls that are lowered or raised.

8. The method according to claim 5, **characterized by** the fact that pixers turn media servers on or off.

9. The method according to claim5, **characterized by** the fact that the projectors include the function of either turning on or off, changing the active video input and blanking the projector without turning it off.

10. The method according to claim 9, **characterized by** the fact that the projectors can be managed by room areas.

11. The method according to claim 5, **characterized by** the fact that the audio triggers the volume in given areas of the room.

12. The method according to claim 5, **characterized by** the fact that the scenarios set the different walls of the rooms, projectors, media servers,.

13. The method according to claim 5, **characterized by** the fact that the activity scheduler has the ability to automate the timed on and off activity of the desired program.
